# EUROPÄISCHE PATENTSCHRIFT

(11) **EP 2 952 412 B1**
(45) Veröffentlichungstag und Bekanntmachung des Hinweises auf die Patenterteilung: **14.06.2017**
(21) Anmeldenummer: 15163500.0
(22) Anmeldetag: 14.04.2015
(51) Int. Cl.: B62D 1/28, B62D 15/02

(54) **VERFAHREN ZUR FAHRASSISTENZ AUF EINEM GROSSPARKPLATZ UND FAHRMANÖVERSYSTEM**
METHOD FOR DRIVER ASSISTANCE IN A LARGE CAR PARK AREA AND DRIVING MANEUVER SYSTEM
PROCÉDÉ D'AIDE À LA CONDUITE SUR UN GRAND PARC DE STATIONNEMENT ET SYSTÈME DE MAN UVRE

(30) Priorität: 20.05.2014 DE 102014209496
(43) Veröffentlichungstag der Anmeldung: 09.12.2015
(73) Patentinhaber: ROBERT BOSCH GMBH, 70442 Stuttgart (DE)
(72) Erfinder: Heigele, Christian, 70435 Stuttgart (DE); Mielenz, Holger, 73760 Ostfildern (DE); Lehner, Philipp, 75417 Muehlacker (DE)

(56) Entgegenhaltungen:
- US-A- 5 612 883

## Beschreibung

### Stand der Technik

Die Erfindung betrifft Verfahren zur Fahrassistenz auf einem Großparkplatz und ein Fahrmanöversystem, wobei ein Fahrzeug mittels Fahrmanöverinformationen auf dem Großparkplatz geleitet wird.

Ein derartiges Verfahren wird in der DE 10 2009 046 912 A1 beschrieben. Dabei wird einem Fahrzeug von einem Serverdienst ein Parkplatz in einem Parkhaus zugewiesen. Zusätzlich werden Informationen über die Topologie des Parkhauses und eine Fahrtrajektorie zum zugewiesenen Parkplatz übertragen. Das Fahrzeug fährt entlang der Trajektorie automatisch zum zugewiesenen Parkplatz. Die Trajektorie zum Zielparkplatz wird durch eine Reihe von Stützstellen beschrieben, so genannte Wegpunkte. Diese enthalten jeweils Informationen über Position, Orientierung des Fahrzeugs an der Stützstelle und gegebenenfalls Sollgeschwindigkeiten und/oder die Krümmung der Trajektorie.

DE 10 2011 082 478 A1 beschreibt ein Verfahren zur Selbstlokalisation von Fahrzeugen in manöverrelevanten Szenarien wie zum Beispiel Parkhäusern. Dazu umfasst das Lokalisierungssystem eine mobile Einheit im Fahrzeug und eine stationäre Einheit in einem vorgegebenen definierten Bezugssystem. In der stationären Einheit sind vordefinierte, optisch erfassbare Markierungen abgelegt, die über eine Sende-/Empfangseinheit von der stationären Einheit an die mobile Einheit gesendet werden. Zu den übertragenen Informationen gehört unter anderem die zu fahrende Trajektorie mit Informationen über die dabei zu passierenden vordefinierten Markierungen und ihrer konkreten Geometrie.

DE 10 2011 088 809 A1 beschreibt ein Verfahren zum Anfordern einer Leitinformation zu einer Parkmöglichkeit mit Lademöglichkeit zum Laden eines Elektrofahrzeugs. Als Leitinformationen werden unter anderem ein Weg zu dem Parkplatz und eine Zielinformation von einer Leiteinrichtung zu dem Elektrofahrzeug übertragen. US5 612 883 A offenbart ein Verfahren nach dem Oberbegriff des Anspruchs 1.

### Offenbarung der Erfindung

### Vorteile der Erfindung

Bei einem erfindungsgemäßen Verfahren zur Fahrassistenz auf einem Großparkplatz, wobei ein Fahrzeug mittels Fahrmanöverinformationen auf dem Großparkplatz geleitet wird, wobei der Großparkplatz mehrere räumlich verteilte Informationsquellen aufweist, welche die Fahrmanöverinformationen bereitstellen, wobei die Fahrmanöverinformationen Parameter von Fahrtrajektorien umfassen und ein Fahrassistenzsystem des Fahrzeugs anhand der Parameter einer Fahrtrajektorie ein der Fahrtrajektorie entsprechendes Fahrmanöver durchführt, ist vorgesehen, dass die Parameter der Fahrtrajektorie eine Startkrümmung, eine Endkrümmung und eine Länge der Fahrtrajektorie umfassen Durch das Verfahren ist es in Fahrmanöversystemen möglich, autonom in Parkhäusern oder anderen Umgebungen mit entsprechender Infrastruktur zu fahren. Die Anforderungen an die Infrastruktur sind dabei aus technischer Sicht relativ gering.

Eine Fahrtrajektorie wird dabei durch einen oder mehrere Trajektorienabschnitte gebildet, welche aus einer Menge von diskreten geometrischen Elementen ausgewählt sind, nämlich Geradenabschnitte, Kurvenabschnitte und Klothoidenabschnitte. Ein Geradenabschnitt ist beispielsweise durch einen Stützpunkt, eine Richtung und einen zusätzlichen Parameter für die Länge vollständig beschrieben. Ein Kurvenabschnitt ist durch eine Krümmung und eine Kreisbogenlänge bzw. Bogenwinkelangabe vollständig beschrieben. Ein Klothoidenabschnitt ist durch eine Anfangskrümmung, eine Endkrümmung und eine Länge vollständig beschrieben. Die Beschreibung eines Geradenabschnitts ist dabei durch einen Klothoidenabschnitt darstellbar, wobei die Anfangskrümmung gleich der Endkrümmung gleich Null ist. Auch ein Kreisabschnitt lässt sich durch einen Klothoidenabschnitt darstellen, wobei die Anfangskrümmung gleich der Endkrümmung gleich der Kurvenkrümmung ist. Es werden stets die drei Parameter Anfangskrümmung, Endkrümmung und Länge verwendet, um einen Trajektorienabschnitt zu beschreiben. Ein Vorteil dieser Darstellung mit drei Parametern ist das Wegfallen einer Klassenzugehörigkeit der zu beschreibenden Trajektorie, was Speicherbedarf reduziert.

Der Großparkplatz kann beispielsweise ein Parkhaus sein, wobei eine Informationsquelle am Eingang des Parkhauses vorhanden ist. Alternativ hierzu kann der Großparkplatz eine Tiefgarage sein, wobei eine Informationsquelle bei einem Eingang der Tiefgarage vorhanden ist. Bevorzugt befinden sich zumindest einige weitere Informationsquellen jeweils am Ein- und Ausgang zu einer Etage, beispielsweise an tragenden Säulen oder Stützpfeilern des Parkhauses oder der Tiefgarage. Der Großparkplatz muss sich nicht zwangsläufig über mehrere Etagen erstrecken, sondern kann sich ebenso gut auf einer Ebene befinden, beispielsweise ein Gelände vor einem Supermarkt, vor einem Zoo, vor einem Stadion oder Ähnliches. Die Informationsquellen können dabei beispielsweise an Straßenlaternen verbaut sein oder an Pylonen.

Eine Fahrtrajektorie von einer Etage bis zur nächsten Etage kann beispielsweise als eine Spirale mit einer konstanten Steigung ausgebildet sein, wobei nur wenige Parameter die Spirale mit konstanter Steigung vollständig definieren, wie bei einem geschlossenen Kreis. Eine Fahrtrajektorie von einer Etage zur nächsten Etage kann auch aus zwei Kreisabschnitten, insbesondere Kreishälften, und zwei geraden Abschnitten bestehen, welche die Kreishälften miteinander verbinden. Auch in diesem Fall sind wenige Parameter notwendig, um die Fahrtrajektorie zu definieren. Das Fahrzeug wird von einer Informationsquelle am Eingang einer Etage bis zur nächsten Informationsquelle geleitet, wo es weitere Informationen empfängt.

Nach der Erfindung stellt jede Informationsquelle dem Fahrzeug jeweils eine Fahrtrajektorie bis zu einer oder mehreren nächsten Informationsquellen bereit. Im Gegensatz zu bekannten Lösungen werden dabei pro Informationsquelle sehr wenige Daten übertragen. Der Eingang zum Großparkplatz bildet oftmals einen Flaschenhals für den Großparkplatz, da beispielsweise ein Parkticketsystem und/oder ein Schrankensystem besteht. Hier ist es vorteilhaft, wenn keine Verzögerungen durch das Fahrmanöversystem erzeugt werden, welche beispielsweise auf die Dauer der Datenübertragung einer vollständigen Trajektorie vom Startpunkt bis zum freien Parkplatz auf dem Großparkplatz zurückzuführen sind. Gegenüber einer möglichen breitbandigen Datenübertragung an dieser Stelle stellt die erfindungsgemäße Lösung eine kostengünstige Variante dar, welche zudem eine geringere Fehleranfälligkeit verspricht, da wenige Daten zu übertragen sind.

Nach einer bevorzugten Ausführungsform weisen die Informationsquellen eine optisch und/oder elektronisch auslesbare Anzeige auf, mittels welcher die Bereitstellung der Fahrmanöverinformationen erfolgt. Eine optisch auslesbare Anzeige kann beispielsweise ein DataMatrix-Code oder ein QR-Code sein, welcher von einer in dem Fahrzeug verbauten Kamera erfasst und interpretiert wird. Eine elektronisch auslesbare Anzeige können beispielsweise aktive RFID-Transponder oder passiven RFID-Tags sein, welche von entsprechenden Empfangs- bzw. Lesegeräten des Fahrzeugs erfasst werden.

Ein wesentlicher Vorteil besteht darin, dass sich die Fahrtrajektorien anhand von Kommunikationsmitteln an das Fahrzeug übertragen lassen, die geringen Speicherplatz aufweisen und entsprechend günstig in der Herstellung sind, wodurch sie zum Beispiel bei Defekten kostengünstig austauschbar sind. RFID-Transponder, -Tags oder optische Codes können, im Gegensatz etwa zu WLAN-Sendern, dabei zusätzlich auch als Landmarken zur Bestimmung bzw. Korrektur der Position des Fahrzeugs dienen.

Nach einer bevorzugten Ausführungsform werden von den Informationsquellen zusätzlich zu den drei Parametern Anfangskrümmung, Endkrümmung und Länge des Trajektorienabschnitts auch der Anfangspunkt und die Anfangsausrichtung des Fahrzeugs relativ zu einem stationären Bezugssystem als Fahrmanöverinformationen bereitgestellt. Das stationäre Bezugssystem wird dabei beispielsweise durch die betreffende Informationsquelle selbst definiert oder anhand von weiteren Landmarken. Das Fahrzeug bestimmt in bekannter Weise die Eigenposition im stationären Bezugssystem und ordnet den übertragenen Trajektorienabschnitt dann in Bezug zur Umgebung ein. Als Landmarken können beispielsweise RFID-Tags oder optische Kennzeichen wie QR-Codes dienen.

Nach einer Ausführungsform ist vorgesehen, dass die Informationsquellen eine Mehrzahl möglicher Fahrmanöver bereitstellen können. Das Verfahren ermöglicht damit die Navigation zu einem freien Parkplatz und zugleich auch die Navigation vom Parkplatz zum Ausgang. Dabei können mehrere alternative Routen, zum Beispiel bei Abzweigungen möglich sein.

Nach einer Ausführungsform wird von den Informationsquellen zusätzlich zu den drei Parametern Anfangskrümmung, Endkrümmung und Länge des Trajektorienabschnitts, gegebenenfalls auch zusätzlich zu dem Anfangspunkt und der Anfangsausrichtung des Fahrzeugs relativ zu dem stationären Bezugssystem, auch eine Zielangabe als Fahrmanöverinformation bereitgestellt. Im Falle eines Parkhauses kann die Zielangabe zum Beispiel "Ausfahrt" oder "nächste Parkebene" sein. Das Fahrzeug interpretiert die Information und wählt je nach Aktion den entsprechend relevanten Trajektorienabschnitt aus. Alternativ dazu kann bei einem semiautomatischen System ein Fahrer jeweils eine der Möglichkeiten auswählen.

Das Fahrmanöver wird vom Fahrassistenzsystem semiautomatisch oder vollautomatisch durchgeführt. Bei einigen semiautomatischen Systemen stellt das Fahrassistenzsystem Lenkhinweise bereit, beispielsweise mittels einer Anzeige oder mittels Sprachanweisungen. Der Fahrer steuert und beschleunigt das Fahrzeug selbst. Bei weiteren semiautomatischen Systemen wird vom Fahrassistenzsystem auch die Querführung übernommen, wobei der Fahrer die Geschwindigkeit und Fahrtrichtung des Fahrzeugs selbst bestimmt. Bei einem vollautomatischen System ist der Fahrer im Prinzip nicht mehr zwingend involviert, kann aber notfalls eingreifen.

Erfindungsgemäß ist außerdem ein Fahrmanöversystem vorgesehen mit mehreren auf einem Großparkplatz räumlich verteilten Informationsquellen und zumindest einem Fahrzeug, wobei die Informationsquellen Fahrmanöverinformationen bereitstellen, die Parameter von Fahrtrajektorien umfassen, wobei die Parameter der Fahrtrajektorie eine Startkrümmung, eine Endkrümmung und eine Länge der Fahrtrajektorie umfassen, und wobei das Fahrzeug ein Lesegerät zum Auslesen der von den Informationsquellen bereitgestellten Informationen aufweist und wobei das Fahrzeug ein Fahrassistenzsystem aufweist, welches eingerichtet ist, anhand der ausgelesenen Parameter ein der Fahrtrajektorie entsprechendes Fahrmanöver durchzuführen.

Bevorzugt ist das Fahrmanöversystem zur Durchführung der hierin beschriebenen Verfahren ausgebildet und/oder eingerichtet. Dementsprechend gelten die im Rahmen der Verfahren beschriebenen Merkmale entsprechend für das Fahrmanöversystem und umgekehrt die im Rahmen des Fahrmanöversystems beschriebenen Merkmal entsprechend für die Verfahren.

Das Lesegerät ist bevorzugt ein RFID-Lesegerät oder eine Kamera. Besonders vorteilhaft ist, wenn Lesegeräte verwendet werden können, die zu weiteren Zwecken wie zur Parkassistenz oder zur Abstandsregelung genutzt werden.

Nach einer bevorzugten Ausführungsform weist das Fahrzeug eine Eingabeeinheit auf, mittels welcher der Fahrer eine vorgeschlagene Fahrtrajektorie auswählen kann.

Nach einer Ausführungsform umfasst das Fahrmanöversystem einen Server, der eingerichtet ist, Fahrmanöverinformationen für die Fahrzeuge zu ermitteln und die Fahrmanöverinformationen den räumlich verteilten Informationsquellen bereitzustellen. Die Informationsquellen weisen dabei Mittel auf, um die vom Server ermittelten Fahrmanöverinformationen aufzunehmen und Mittel, um variabel Informationen bereitstellen zu können.

Der Server ist dabei mit einem Computerprogramm ausgestattet, welches die Manövrierung des Fahrzeugs von dem Startpunkt bis zu den freien Parkplätzen und von Parkplätzen aus dem Großparkplatz heraus implementiert.

Die Beschreibung von Fahrtrajektorien durch wenige diskrete geometrische Elemente bildet den Vorteil, dass im Fall der Server-zu-Fahrzeug-Kommunikation mittels der Informationsquellen der Aufwand für die Speicherung und das Datenaufkommen bei der Übertragung sehr gering ist.

Ein Vorteil gegenüber dem Stand der Technik ist bei dieser Ausführungsform auch darin zu sehen, dass die Information auch nach der Einfahrt auf den Großparkplatz noch variiert werden kann, wenn sich der Fahrer nicht daran hält. Ein weiterer Vorteil ergibt sich daraus, dass die Information auch dann variiert werden kann, wenn sich kurzfristig ein weiterer freier Parkplatz in der Nähe ergibt. Vorteilhaft muss zur Umsetzung nicht die gesamte Trajektorie vom jeweiligen Standpunkt des Fahrzeugs bis zum freien Parkplatz übertragen werden.

Ist beispielsweise auf einer der Informationsquelle zugeordneten Etage ein Parkplatz frei, dann wird das Fahrzeug von dieser Informationsquelle aus dem Auf- und Abfahrtsbereich zu dieser Etage herausgeleitet. In solchen Fällen, bei denen der Parkplatz erst während der Fahrt vom Startpunkt bis zur betreffenden Etage frei wird, kann die Information durch die mehreren räumlich verteilten Informationsquellen entsprechend kurzfristig variiert werden.

Das Fahrmanöversystem ist auch als autonomes Transportsystem und Robotersteuerung zum Beispiel in Logistikzentren einsetzbar, wobei die Bezeichnung Fahrmanöversystem entsprechend in "Transport"-Leitsystem geändert ist.

### Kurze Beschreibung der Zeichnung

Ausführungsbeispiele der Erfindung sind in der folgenden Zeichnung dargestellt und in der nachfolgenden Beschreibung näher erläutert.

Es zeigt:

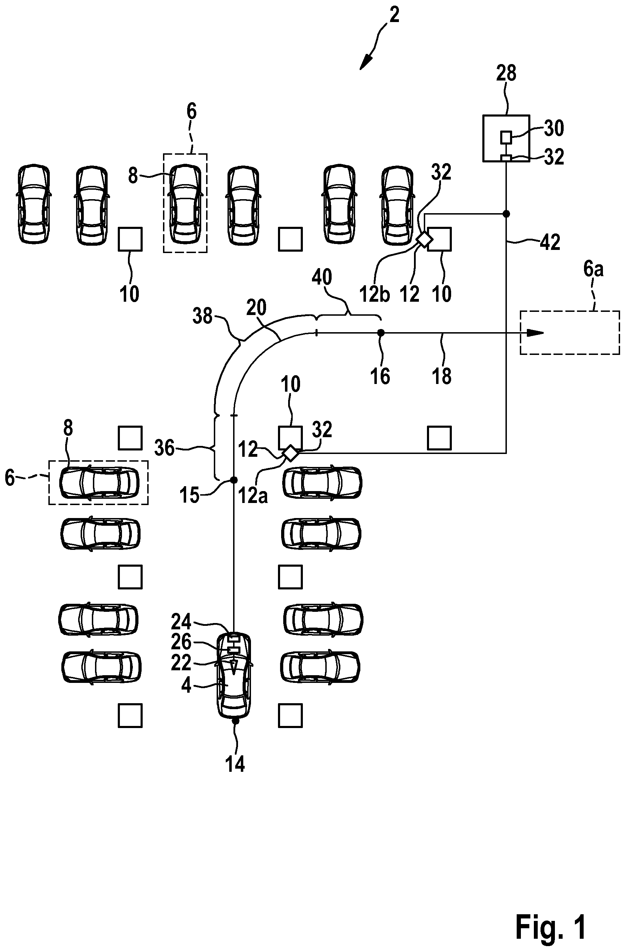

- Figur 1: ein Großparkplatz mit einem Fahrmanöversystem.

### Ausführungsformen der Erfindung

Figur 1 zeigt einen Großparkplatz 2, auf dem ein erfindungsgemäßes Fahrmanöversystem installiert ist. Dargestellt ist ein Fahrzeug 4, welches von einem Startpunkt 14 auf einen freien Parkplatz 6a geleitet wird.

Auf dem Großparkplatz 2, welcher sich beispielsweise in einer Ebene eines Parkhauses befinden kann, sind weitere Fahrzeuge 8 auf weiteren Parkplätzen 6 geparkt und Begrenzungselemente 10 vorhanden, beispielsweise Stützpfeiler.

An einigen Begrenzungselementen 10 sind Informationsquellen 12 angeordnet, welche optische oder elektronische Anzeigen sein können, die stationäre oder variable Informationen anzeigen, beispielsweise DataMatrix-Codes, QR-Codes oder RFID-Transponder. Die Informationsquellen 12 sind räumlich über den Großparkplatz 2 verteilt. Jede Informationsquelle 12 stellt dem Fahrzeug 4 einen Abschnitt 20 der gesamten Fahrtrajektorie 18 bereit. Beispielsweise stellt die Informationsquelle 12a den Abschnitt 20 der Fahrtrajektorie 18 von einem Anfangspunkt 15 bis zu einem Zwischenpunkt 16 bereit. Es ist sinnvoll zu bemerken, dass, aufgrund der Tatsache, dass der Abschnitt 20 der gesamten Fahrtrajektorie 18 ebenfalls eine Fahrtrajektorie 18 bildet, im Rahmen der vorliegenden Offenbarung hier nicht weiter zwischen Abschnitt 20 und Fahrtrajektorie 18 unterschieden wird.

Der Abschnitt 20 der Fahrtrajektorie 18 umfasst hier beispielhaft einen ersten Geradenabschnitt 36, einen Kreisabschnitt 38 und einen zweiten Geradenabschnitt 40, welche eine Rechtskurve beschreiben, bei dem das Fahrzeug 4 seine Ausrichtung um 90° ändert. Der Abschnitt 20 der Fahrtrajektorie 18 lässt sich durch wenige Parameter beschreiben, nämlich durch die Länge des ersten Geradenabschnitts 36, die Krümmung und Länge des Kreisabschnitts 38 und die Länge des zweiten Geradenabschnitts 40. In dem einheitlichen System ohne Klassifizierung von Geraden, Kreisen und Klothoiden werden die ersten und zweiten Geradenabschnitte 36, 40 sowie der Kreisabschnitt 38 wie zuvor beschrieben als Spezialformen von Klothoiden parametrisiert. Der Abschnitt 20 der Fahrtrajektorie 18 wird somit durch sehr wenig Information definiert, so dass diese über RFID oder optisch von der Informationsquelle 12 an das Fahrzeug 4 übertragen werden kann.

Weitere von der Informationsquelle 12 bereitgestellte Informationen umfassen die Koordinaten des Anfangspunktes 15 und eine Anfangsorientierung des Fahrzeugs 4 relativ zur Informationsquelle 12a, sowie eine Zielangabe "freier Parkplatz".

Mittels einem Lesegerät 22, 24, beispielsweise einer Kamera 22 oder einem RFID-Lesegerät 24, welche mit einer Datenverarbeitungseinrichtung 26 des Fahrzeugs 4 verbunden sind, erfasst das Fahrzeug 4 die Informationsquelle 12a. Durch die Größe und Schiefheit der Informationsquelle 12a, beispielsweise durch Größe und Position des DataMatrix-Code oder QR-Code, können die Position und die Ausrichtung des Fahrzeugs 4 relativ zur Informationsquelle 12a bestimmt werden, wie beispielsweise in DE 10 2011 082 478 A1 beschrieben. Hierdurch und durch die Interpretation der kodierten Daten wird auf den Anfangspunkt 15 des Abschnitts 20 der Fahrtrajektorie 18 relativ zur Aktuellen Position des Fahrzeugs 4 geschlossen und der Abschnitt 20 korrekt in Relation zur aktuellen Fahrzeugposition gesetzt. Vor Erreichen oder zum Zeitpunkt des Erreichens des Zwischenpunkts 16 kann die nächste Informationsquelle 12b erfasst werden und das Fahrzeug 4 folgt weiter der abschnittsweise definierten Fahrtrajektorie 18 bis zum freien Parkplatz 6a oder alternativ bis zu einer Ausfahrt.

Jede Informationsquelle 12 ist in der dargestellten Ausführungsform außerdem über eine Datenleitung 42 mit einem Server 28 verbunden, über welchen die darzustellenden Informationen ermittelt und bereitgestellt werden. Zu diesem Zweck weisen die Informationsquelle 12 und der Server 28 jeweils Kommunikationseinrichtungen 32 auf. Der Server 28 umfasst außerdem eine Datenverarbeitungseinrichtung 30, mittels welcher die Steuerung des Fahrmanöversystems erfolgt. Alternativ kann zur Kommunikation zwischen dem Server 28 und den Informationsquellen 12 auch eine kabellose Verbindung vorgesehen sein, etwa WLAN. Alternativ ist kein Server 28 vorgesehen und die Informationsquellen 12 stellen statische Informationen bereit.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Fahrassistenz auf einem Großparkplatz (2), wobei ein Fahrzeug (4) mittels Fahrmanöverinformationen auf dem Großparkplatz (2) geleitet wird, wobei der Großparkplatz (2) mehrere räumlich verteilte Informationsquellen (12) aufweist, welche die Fahrmanöverinformationen bereitstellen,
wobei die Fahrmanöverinformationen Parameter von Fahrtrajektorien (18) umfassen und ein Fahrassistenzsystem des Fahrzeugs (4) anhand der Parameter einer Fahrtrajektorie (18) ein der Fahrtrajektorie (18) entsprechendes Fahrmanöver durchführt,
wobei die Parameter der Fahrtrajektorie (18) eine Startkrümmung, eine Endkrümmung und eine Länge der Fahrtrajektorie (18) umfassen, **dadurch gekennzeichnet, dass** jede Informationsquelle (12) dem Fahrzeug (4) jeweils eine Fahrtrajektorie (18) bis zu einer oder mehreren nächsten Informationsquellen (12) bereitstellt.

2. Verfahren nach einem der vorhergehenden Ansprüche, **dadurch gekennzeichnet, dass** die Informationsquellen (12) eine optisch und/oder elektronisch auslesbare Anzeige aufweisen, mittels welcher die Bereitstellung der Fahrmanöverinformationen erfolgt.

3. Verfahren nach einem der vorhergehenden Ansprüche, **dadurch gekennzeichnet, dass** von den Informationsquellen (12) zusätzlich ein Anfangspunkt (15) und eine Anfangsausrichtung des Fahrzeugs (4) relativ zu einem stationären Bezugssystem als Fahrmanöverinformationen bereitgestellt werden.

4. Verfahren nach einem der vorhergehenden Ansprüche, **dadurch gekennzeichnet, dass** die Informationsquellen (12) eine Mehrzahl möglicher Fahrmanöver bereitstellen können.

5. Verfahren nach einem der vorhergehenden Ansprüche, **dadurch gekennzeichnet, dass** von den Informationsquellen (12) zusätzlich eine Zielangabe als Fahrmanöverinformation bereitgestellt wird.

6. Fahrmanöversystem mit mehreren auf einem Großparkplatz (2) räumlich verteilten Informationsquellen (12) und zumindest einem Fahrzeug (4), wobei die Informationsquellen (12) Fahrmanöverinformationen bereitstellen, die Parameter von Fahrtrajektorien (18) umfassen, wobei die Parameter der Fahrtrajektorie (18) eine Startkrümmung, eine Endkrümmung und eine Länge der Fahrtrajektorie (18) umfassen, wobei das Fahrzeug (4) ein Lesegerät (22, 24) zum Auslesen der von den Informationsquellen bereitgestellten Informationen aufweist und wobei das Fahrzeug (4) ein Fahrassistenzsystem aufweist, welches eingerichtet ist, anhand der ausgelesenen Parameter ein der Fahrtrajektorie (18) entsprechendes Fahrmanöver durchzuführen **dadurch gekennzeichnet, dass** jede Informationsquelle (12) dem Fahrzeug (4) jeweils eine Fahrtrajektorie (18) bis zu einer oder mehreren nächsten Informationsquellen (12) bereitstellt.

7. Fahrmanöversystem nach Anspruch 6, **dadurch gekennzeichnet, dass** das Lesegerät (22, 24) ein RFID-Lesegerät (24) oder eine Kamera (22) ist.

8. Fahrmanöversystem nach Anspruch 6 oder 7, **dadurch gekennzeichnet, dass** das Fahrzeug (4) eine Eingabeeinheit aufweist, mittels welcher ein Fahrer eine Fahrtrajektorie (18) auswählen kann.

9. Fahrmanöversystem nach einem der Ansprüche 6 bis 8, mit zumindest einem Server (28), der eingerichtet ist, Fahrmanöverinformationen für die Fahrzeuge (4) zu ermitteln und die Fahrmanöverinformationen den räumlich verteilten Informationsquellen (12) bereitzustellen.

10. Informationsquelle (12) konfiguriert zur Verwendung in einem Fahrmanöversystem nach einem der Ansprüche 6 bis 9.

## Claims

1. Method for providing driving assistance in a large car park (2), a vehicle (4) being guided in the large car park (2) by means of driving manoeuvre information, the large car park (2) having a plurality of spatially distributed information sources (12) which provide the driving manoeuvre information,
the driving manoeuvre information comprising parameters of driving trajectories (18), and a driving assistance system of the vehicle (4) carrying out, on the basis of the parameters of a driving trajectory (18), a driving manoeuvre corresponding to the driving trajectory (18),
the parameters of the driving trajectory (18) comprising a starting curvature, an end curvature and a length of the driving trajectory (18), **characterized in that** each information source (12) respectively provides the vehicle (4) with a driving trajectory (18) to one or more next information sources (12).

2. Method according to one of the preceding claims, **characterized in that** the information sources (12) have an optically and/or electronically readable display which is used to provide the driving manoeuvre information.

3. Method according to one of the preceding claims, **characterized in that** the information sources (12) additionally provide a starting point (15) and a starting orientation of the vehicle (4) relative to a stationary reference system as driving manoeuvre information.

4. Method according to one of the preceding claims, **characterized in that** the information sources (12) can provide a plurality of possible driving manoeuvres.

5. Method according to one of the preceding claims, **characterized in that** the information sources (12) additionally provide a destination statement as the driving manoeuvre information.

6. Driving manoeuvre system having a plurality of information sources (12) spatially distributed in a large car park (2) and at least one vehicle (4), the information sources (12) providing driving manoeuvre information which comprises parameters of driving trajectories (18), the parameters of the driving trajectory (18) comprising a starting curvature, an end curvature and a length of the driving trajectory (18),
the vehicle (4) having a reader (22, 24) for reading the information provided by the information sources, and
the vehicle (4) having a driving assistance system which is set up to carry out a driving manoeuvre corresponding to the driving trajectory (18) on the basis of the parameters which have been read, **characterized in that** each information source (12) respectively provides the vehicle (4) with a driving trajectory (18) to one or more next information sources (12).

7. Driving manoeuvre system according to Claim 6, **characterized in that** the reader (22, 24) is an RFID reader (24) or a camera (22).

8. Driving manoeuvre system according to Claim 6 or 7, **characterized in that** the vehicle (4) has an input unit which can be used by a driver to select a driving trajectory (18).

9. Driving manoeuvre system according to one of Claims 6 to 8, having at least one server (28) which is set up to determine driving manoeuvre information for the vehicles (4) and to provide the spatially distributed information sources (12) with the driving manoeuvre information.

10. Information source (12) configured for use in a driving manoeuvre system according to one of Claims 6 to 9.

## Revendications

1. Procédé d'aide à la conduite sur un grand parc de stationnement (2), dans lequel un véhicule (4) est conduit au moyen d'informations de manoeuvres de conduite sur le grand parc de stationnement (2), dans lequel le grand parc de stationnement (2) comporte plusieurs sources d'informations (12) réparties spatialement, qui fournissent les informations de manoeuvre de conduite,
dans lequel les informations de manoeuvres de conduite comprennent des paramètres de trajectoires de conduite (18), et un système d'assistance à la conduite du véhicule (4) effectue, sur la base des paramètres d'une trajectoire de conduite (18), une manoeuvre de conduite correspondant à la trajectoire de conduite (18),
dans lequel les paramètres de la trajectoire de conduite (18) comprennent une courbure de début, une courbure de fin et une longueur de la trajectoire de conduite (18),
**caractérisé en ce que** chaque source d'informations (12) fournit respectivement au véhicule (4) une trajectoire de conduite (18) jusqu'à une ou plusieurs sources d'informations (12) suivantes.

2. Procédé selon l'une quelconque des revendications précédentes, **caractérisé en ce que** les sources d'informations (12) comportent un affichage lisible de manière optique et/ou électronique, par l'intermédiaire duquel s'effectue la fourniture des informations de manoeuvres de conduite.

3. Procédé selon l'une quelconque des revendications précédentes, **caractérisé en ce qu'**un point de départ (15) et une direction de départ du véhicule (4) par rapport à un système de référence fixe sont en outre fournis par les sources d'informations (12) en tant qu'informations de manoeuvres de conduite.

4. Procédé selon l'une quelconque des revendications précédentes, **caractérisé en ce que** les sources d'informations (12) peuvent fournir une pluralité de manoeuvres de conduite possibles.

5. Procédé selon l'une quelconque des revendications précédentes, **caractérisé en ce qu'**une destination est en outre fournie par les sources d'informations (12) en tant qu'information de manoeuvre de conduite.

6. Système de manoeuvre de conduite comportant plusieurs sources d'informations (12) réparties spatialement sur un grand parc de stationnement (2) et au moins un véhicule (4),
dans lequel les sources d'informations (12) fournissent des informations de manoeuvres de conduite qui comprennent des paramètres de trajectoires de conduite (18), dans lequel les paramètres des trajectoires de conduite (18) comprennent une courbure de début, une courbure de fin et une longueur de la trajectoire de conduite (18),
dans lequel le véhicule (4) comporte un appareil de lecture (22, 24) destiné à lire les informations fournies par les sources d'informations et dans lequel le véhicule (4) comporte un système d'aide à la conduite qui est conçu pour effectuer, sur la base des paramètres lus, une manoeuvre de conduite correspondant à la trajectoire de conduite (18),
**caractérisé en ce que** chaque source d'informations (12) fournit respectivement au véhicule (4) une trajectoire de conduite (18) jusqu'à une ou plusieurs sources d'informations (12) suivantes.

7. Système de manoeuvre de conduite selon la revendication 6, **caractérisé en ce que** l'appareil de lecture (22, 24) est un appareil de lecture RFID (24) ou une caméra (22).

8. Système de manoeuvre de conduite selon la revendication 6 ou 7, **caractérisé en ce que** le véhicule (4) comporte une unité d'entrée au moyen de laquelle un conducteur peut sélectionner une trajectoire de conduite (18).

9. Système de manoeuvre de conduite selon l'une quelconque des revendications 6 à 8, comportant au moins un serveur (28) qui est conçu pour déterminer des informations de manoeuvre de conduite destinées au véhicule (4) et pour fournir les informations de manoeuvres de conduite aux sources d'informations (12) réparties spatialement.

10. Source d'informations (12) configurée pour être utilisée dans un système de manoeuvre de conduite selon l'une quelconque des revendications 6 à 9.
